Europäisches Patentamt

European Patent Office

Office européen des brevets

(11) Veröffentlichungsnummer: **0 240 903**
**A2**

(12) **EUROPÄISCHE PATENTANMELDUNG**

(21) Anmeldenummer: **87104723.9**

(22) Anmeldetag: **31.03.87**

(51) Int. Cl.³: **C 08 F 279/02**
**//(C08F279/02, 212:06)**

(30) Priorität: **08.04.86 DE 3611704**

(43) Veröffentlichungstag der Anmeldung:
**14.10.87 Patentblatt 87/42**

(84) Benannte Vertragsstaaten:
**BE DE FR GB IT NL**

(71) Anmelder: **BASF Aktiengesellschaft**
**Carl-Bosch-Strasse 38**
**D-6700 Ludwigshafen(DE)**

(72) Erfinder: **Bronstert, Klaus, Dr.**
**Gartenstrasse 26**
**D-6719 Carlsberg(DE)**

(72) Erfinder: **Hoenl, Hans, Dr.**
**Hauptstrasse 69a**
**D-6719 Obersulzen(DE)**

(72) Erfinder: **Echte, Adolf, Dr.**
**Leuschnerstrasse 42**
**D-6700 Ludwigshafen(DE)**

(72) Erfinder: **Klaerner, Peter, Dr.**
**Hauptstrasse 62**
**D-6719 Battenberg(DE)**

(54) Verfahren zur Herstellung von schlagfestem Poly(alkyl)styrol.

(57) Herstellung von mit Kautschuk schlagfest modifiziertem, transluzenten Polystyrol, bei dem man Verbindungen aus der Klasse der Styrole in Gegenwart eines kautschukelastischen Polymeren polymerisiert, das Thiolgruppen enthält.

EP 0 240 903 A2

0240903

O.Z. 0050/38378                      BASF Aktiengesellschaft

Verfahren zur Herstellung von schlagfestem Poly(alkyl)styrol

Die Erfindung geht aus von einem Verfahren zur Herstellung von mit Kautschuk schlagfest modifiziertem Polystsyrol und/oder Poly(alkyl)-styrol, wobei man einen Reaktionsansatz bestehend aus

a) Styrol, kernalkylierten Styrolen, seitenketten-alkylierten Styrolen und/oder deren Mischungen

und

b) mindestens einem kautschukartigen Polymerisat P, das Thiolgruppen P-(SH)$_x$ aufweist, wobei x = ganze Zahlen von 1 bis 5 bedeuten, und P ein Polymerisat aus mehr als 80 % konjugierten Dienen ist,

polymerisiert.

Zum Stand der Technik nennen wir:

(1) DE-OS 17 69 118
(2) EP 0 021 488
(3) DE-AS 26 13 352 und
(4) DE-OS 28 13 328

In (1) bzw. (2) ist die Herstellung von schlagfestem, nichttransluzentem Polystyrol beschrieben. Verwendet werden zur Herstellung dieser Produkte Mischungen aus Polybutadien und Styrol-Butadien-Blockcopolymerisaten. Nach dem in (3) beschriebenen Verfahren werden auf diskontinuierlichem Wege unter Verwendung von Styrol-Butadien-Blockcopolymerisaten transluzente, schlagfeste Polystyrole erhalten.

Des weiteren wird in (4) ein Verfahren zur Herstellung von Blockcopolymerisaten beschrieben, in dem man Polymere mit primären oder sekundären Thiol-Endgruppen mit einem radikalisch polymerisierbaren Monomer in Kontakt bringt und eine radikalische Polymerisation initiiert. Es entsteht kein schlagfestes Polystyrol, sondern ein Blockcopolymerisat, das mindestens einen Block des Ausgangs-Polymeren und mindestens einen radikalisch polymerisierten Block aufweist.

Styrol-Butadien-Blockcopolymerisate sind teurer als Polybutadienkautschuke. Außerdem haben sie eine vergleichsweise hohe Lösungsviskosität, die insbesondere bei der Herstellung von schlagzähem Polystyrol mit hohen Kautschukgehalten störend ist.

Es bestand daher die Aufgabe, die in (3) verwendeten teureren Blockkautschuke durch billigere Kautschuke zu ersetzen, die ebenfalls zu transluzenten schlagfestem Polystyrol führen können und außerdem eine niedrigere Lösungsviskosität aufweisen.

Die Aufgabe wird gelöst durch ein Verfahren gemäß Patentanspruch 1.

Die Erfindung betrifft daher ein Verfahren zur Herstellung von mit Kautschuk schlagfest modifiziertem transluzenten Polystyrol und/oder Poly-(alkyl-)styrol, bei dem man einen Reaktionsansatz bestehend aus Styrol, kernalkyliertem Styrol, seitenketten-alkyliertem Styrol oder deren Mischungen und mindestens einem kautschukartigen Polymerisat polymerisiert.

Das Verfahren ist dadurch gekennzeichnet, daß die Polymerisation kontinuierlich in Masse oder Lösung thermisch oder in Gegenwart Radikale bildender Initiatoren unter Rühren innerhalb von 5 bis 20 Stunden bis zu einem Endumsatz von 70 % bis 95 %, bezogen auf das Monomere, durchgeführt wird, wobei derart gerührt wird, daß nach Abschluß der Polymerisation die im erhaltenen schlagzähmodifizierten Styrol dispergierte Weichkomponente einen mittleren Teilchendurchmesser von 0,1 bis 0,8 µm besitzt und wobei das eingesetzte kautschukartige Polymere der Formel $P-(SH)_x$ entspricht, wobei x die Anzahl der Thiolgruppen pro Kautschukmolekül darstellt und eine ganze Zahl von 1 bis 5 bedeutet und P ein Polymerisat aus konjugier-ten Dienen ist.

Das erfindungsgemäße Verfahren ermöglicht zum einen die Herstellung von transluzenten schlagfesten Polystyrolen oder Polyalkylstyrolen unter Verwendung von Kautschuken auf der Basis von Polybutadien. Zum anderen ist die Herstellung nicht-transluzenter Produkte mit verbesserten Eigenschaften möglich.

Nachstehend werden das erfindungsgemäße Verfahren und die zu seiner Durchführung erforderlichen Ausgangsstoffe näher beschrieben.

Verfahren zur Herstellung von schlagfestem Polystyrol sind dem Fachmann aus (1), (2) oder der DE-AS 17 70 392 bekannt. Das in (1) beschriebene Verfahren wird in Masse und die in (2) und (3) beschriebenen Verfahren in Lösung durchgeführt. Verfahren zur Herstellung von schlagfestem und zugleich transluzentem Polystyrol sind außerdem in der unter (3) genannten Druckschrift beschrieben.

Das erfindungsgemäße Verfahren wird in Anlehnung an die bekannten Verfahren kontinuierlich durchgeführt. Dabei wird das in den Monomeren (z.B. Styrol) gelöste kautschukartige Polymerisat unter Rühren, also unter Einwirkung von Scherkräften, in der dem Fachmann bekannten Weise polymerisiert.

Der Polymerisation wird ein Reaktionsansatz unterworfen, der im Sinne der vorliegenden Erfindung aus den Monomeren und dem kautschukartigen Polymerisat besteht, wobei der Reaktionsansatz, bezogen auf das Gemisch aus Monomeren und kautschukartigem Polymerisat 3 bis 30 Gew.-%, vorzugsweise 4 bis 16 und insbesondere 5 bis 14 Gew.-% des kautschukartigen Polymerisates enthält.

Als Monomere kommen Styrol, alkylsubstituierte Styrole oder deren Gemische in Betracht. Für den vorgesehenen Verwendungszeck wird vorzugsweise ausschließlich das preiswerte Styrol verwendet. Es können außerdem bevorzugt Mischungen aus Styrol und kernalkylierten Styrolen wie p-Methylstyrol oder $\alpha$-Methylstyrol oder andere substituierte Styrole Verwendung finden.

Als kautschukartiges Polymerisat im Sinne des erfindungsgemäßen Verfahrens kommen die folgenden beschriebenen modifizierten Polybutadiene in Frage, die eine oder bis zu 5 endständige oder statistisch über die Kettenlänge verteilte SH-Gruppen enthalten. Sie können allgemein durch die Formel $P-(SH)_x$ charakterisiert werden, wobei P ein Polymerisat aus mehr als 80 % konjugierten Dienen mit 4 bis 5 C-Atomen, wie Butadien oder Isopren oder ein Copolymerisat aus diesen Monomeren darstellt, das gegebenenfalls noch bis zu 20 % vinylaromatische Monomeren enthalten kann, und x eine ganze Zahl von 1 bis 5 ist. Besonders geeignet sind Polymere, die überwiegend aus Polybutadien bestehen.

Die Struktur und Herstellung derartiger Produkte ist dem Fachmann bekannt, z.B. aus (4), der US-PS 3 755 269 und der GB-PS 1 432 782 sowie 1 432 783.

Solche kautschukartigen Polymerisate werden bevorzugt durch anionische Polymerisation hergestellt, z.B. wird ein konjugiertes Dien, wie Butadien, in an sich bekannter Weise in einem Lösungsmittel, bevorzugt einem Kohlenwasserstoff, wie n-Hexan oder Cyclohexan, und mit Initiatoren, wie sec.-Butyl-lithium, polymerisiert. Nach Beendigung der Polymerisation setzt man das lebende Polymere sodann mit mindestens 1 Mol Ethylensulfid, Propylensulfid oder anderen Episulfiden je Mol Katalysator um, wobei eine $-CH_2-CH_2-S-Li-$ oder eine $CH_2-C(CH_3)-S-Li-$Endgruppe in das Molekül eingebaut wird. Verwendet man bifunktionelle Starter für die Polymerisation, so enthält der Kautschuk nach der Umsetzung mit den genannten Sulfiden 2-S-Li-Endgruppen. Möglich, jedoch weniger bevorzugt, ist ferner, fertige Kautschuke in an sich bekannter Weise, z.B. nach der Arbeitsweise

"Metallation of unsaturated polymers and formation of graft polymers", Tate et al., J. of Pol. Sc. Part A-1, Vol. 9 (1971), S. 139-145, mit Li zu metallieren und die auf diese Weise statistisch im Polymermolekül enthaltenen anionischen Gruppen mit den oben genannten Sulfiden in -S-Li- Gruppen umzuwandeln.

Als kautschukartige Polymerisat $P-(SH)_x$ soll vorzugsweise Polybutadien mit nur einer Mercaptangruppierung eingesetzt werden. Das mittlere Mole- kulargewicht (GPC-Mittel) des kautschukartigen Polymerisats der genannten Formel soll im Bereich von 20 bis 200.000, vorzugsweise im Bereich von 30 bis 100.000 liegen.

Selbstverständlich können auch Mischungen von kautschukartigen Polymerisaten der allgemeinen Formel $P-(SH)_x$ mit anderen, nichtmodifizierten Kautschuken, wie Polybutadien, Polyisopren und dgl. Verwendung finden, wobei diese Kautschuke Molekulargewichte im Bereich von 120.000 bis 400.000 haben sollen. Die Mischungen sollen mindestens 30 % des kau- tschukartigen Polymerisats $P-(SH)_x$ enthalten. Die Mischungsverhältnisse sollen zweckmäßig derartig gewählt werden, daß das mittlere Molekulargewicht der Mischung im Bereich von 20.000 bis 300.000, vorzugsweise von 30.000 bis 100.000, liegt.

Das erfindungsgemäße Verfahren wird in Masse oder Lösung durchgeführt. Als Lösungsmittel, die angewendet werden können, kommen Toluol, Xylol oder vorzugsweise Ethylbenzol sowie Methylethylketon in Betracht. Die Lösungsmittel werden in Mengen von 2 bis 25 Gew.-%, bezogen auf die Mono- meren, angewendet. Bevorzugt ist der kontinuierliche Lösungsprozeß mit Ethylbenzol als Lösungsmittel.

Das erfindungsgemäße Verfahren kann thermisch oder in Gegenwart von peroxidische Radikale bildenden Initiatoren durchgeführt werden.

Als solche Initiatoren kommen solche aus der Gruppe der Alkyl- oder Acylperoxide, wie Hydroperoxide, Perester oder Peroxicarbonate in Betracht. Vorzugsweise werden die pfropfaktiven Initiatoren Dibenzoylperoxid, tert.-Butylperoxi-2-ethylhexanoat, das tert.-Butylperbenzoat oder andere angewendet. Die Initiatoren werden in Mengen von 0,02 bis 0,2 Gew.-%, bezogen auf die Monomeren, angewendet. Die Anwendung von Initiatoren ist dem Fachmann bekannt; es ist ihm außerdem bekannt, den Zerfall der Initiatoren entweder durch Zusätze wie Amine, oder aber durch Wahl geeigneter Temperaturintervalle zu beschleunigen, um die Pfropfaktivität zu erhöhen.

Das erfindungsgemäße Verfahren kann auch in Gegenwart von Kettenüberträgern durchgeführt werden. Es kommen hierzu die üblicherweise verwendeten Mercaptane mit 4 bis 18 C-Atomen in Betracht. Von den genannten Mercaptanen haben sich besonders das n-Butylmercaptan, das n-Octylmercaptan sowie das n- oder t-Dodecylmercaptan bewährt. Die Mercaptane werden in Mengen von 0,01 bis 0,3 Gew.-%, bezogen auf die Monomeren angewendet.

Das erfindungsgemäße Verfahren kann in Gegenwart von Schmiermitteln, insbesondere von Mineralölen, durchgeführt werden. Vorzugsweise werden diese Mittel bereits dem Reaktionsansatz zugesetzt. In Betracht kommen insbesondere Weißöle, d.h. aromatenarme technische Weißöle bzw. aromatenfreies medizinisches Weißöl; letzteres insbesondere, wenn die nach dem Verfahren enthaltenen schlagzähen Polystyrole zur Herstellung von Formteilen Verwendung finden, die den lebensmittelrechtlichen Bestimmungen im Verpackungssektor genügen müssen.

Auch Antioxydantien können während der Polymerisation zugegen sein. In Betracht kommen vor allem die dem Fachmann bekannten sterisch gehinderten Phenole in üblichen Mengen.

Bei dem Verfahren wird innerhalb von 5 bis 20 Stunden bis zu einem Endumsatz von 70 bis 95 %, vorzugsweise von 80 bis 90 %, bezogen auf das Monomere polymerisiert. Die Polymerisation wird bei erhöhter Temperatur durchgeführt, wobei darunter Temperaturen im Bereich von 50 bis 200°C, insbesondere im Bereich von 60 bis 150°C zu verstehen sind. Der Fachmann weiß, wie er bei bestimmter Verfahrensführung aus den genannten Temperaturintervallen die für das Verfahren erforderliche Temperatur bei Verwendung bestimmter Initiatoren oder bei Zielrichtung bestimmter Produkte herauszuwählen hat. Das Verfahren kann isotherm oder mit einem Temperaturprofil betrieben werden.

Das Verfahren wird entweder in einem Rohrreaktor oder in einer Kaskade hintereinander geschalteter Reaktoren durchgeführt. Unter Rohrreaktor, der auch aus Turmreaktor bezeichnet werden kann, versteht man einen Reaktor, dessen Längsausdehnung das 2 bis 20fache des Durchmessers der Querschnittsfläche beträgt. Man kann auch solche Turmreaktoren in Kaskade hintereinander schalten, auch Kaskaden aus Rührkesseln oder solche aus Rührkesseln und Turmreaktoren haben sich gewährt. Solche Verfahren sind bekannt und beispielsweise in A. Echte "Styrolpolymere", Winnacker-Küchler Chemische Technologie, Band 6, Organische Technologie II, Carl Hauser Verlag München Wien 1982, S. 373-390, beschrieben. Das Verfahren wird unter Rühren durchgeführt, wobei die Polymerisation in Masse oder Lösung so abläuft, daß nach einem geringen Umsatz sich zwei Phasen ausbilden, nämlich eine kohärente Kautschuk-Styrol-Phase und eine nichtkohärente Polystyrol-Styrol-Phase. Bei Steigerung des Umsatzes tritt eine Phaseninversion ein, wobei nun die Polystyrolphase die kohärente Phase wird. In diesem Reaktionsabschnitt wird die Teilchengröße durch die Rührgeschwindigkeit eingestellt.

Solche Vorgänge sind bekannt und beispielsweise in A. Echte, Angew. Makromol. Chemie 58/59 (1977), S. 175-198 beschrieben. Die hierfür erforderlichen Scherbedingungen sind abhängig u.a. von der gegebenen Reaktorgröße, dem Füllgrad, der Art der Füllung und der Viskosität sowie der Art des Rührorgans. Die Scherbedingungen können vom Fachmann anhand weniger Versuche festgelegt werden. Hierzu findet man Hinweise in M.H. Pahl, "Grundlagen des Mischens" in "Kunststofftechnik, Mischen von Kunststoffen", VDI-Verlag GmbH Düsseldorf 1983, S. 1-72 und in Freeguard, 6.7., Structural Control of Rubber Modified Thermoplastic as Produced by the Mass Process, in Br. Polym. J., 1974, 6, 205-228.

Die Scherbedingungen werden so gewählt, daß sich nach vollendeter Polymerisation innerhalb des modifizierten Polystyrols eine dispergierte Weichkomponente ausgebildet hat mit einem mittleren Teilchendurchmesser von 0,1 bis 0,8 $\mu$m. Es ist hierbei der $d_{50}$-Wert als Zahlenmittel zu verstehen. Vorzugsweise kann die mittlere Teilchengröße auch im Bereich von 0,2 bis 0,6 $\mu$m liegen. Das Ergebnis der Polymerisation des Reaktionsansatzes ist dann ein Pfropfmischpolymerisat von Styrol auf das kautschukartige Polymerisat, das die Weichphase bildet. Diese Weichphase ist in der Hartmatrix, also dem Polystyrol, fein verteilt und kann auf Elmi-Aufnahmen von Dünnschnitten dargestellt werden. Die Teilchen sind sogenannte Kapselteilchen. Man versteht darunter solche Teilchen, die aus einem einzelnen Kern aus Matrixmaterial und einer Hülle aus Polybutadien besteht. Siehe dazu Echte, 1.c.

Im Anschluß an die Polymerisation wird das Polymerisat in üblicher Weise gewonnen. Dies kann z.B. durch Entgasen der Mischung auf einem Entgasungsextruder geschehen, indem das Reaktionsprodukt von überschüssigem Styrol und gegebenenfalls von Lösungsmittel im Vakuum befreit wird. Man wählt dabei Temperaturen zwischen 180 bis 280°C und Drücke von 30 bis unter 1 mbar.

Die nach dem erfindungsgemäßen Verfahren erhaltenen schlagfesten und transluzenten Polystyrole können nach den für Thermoplaste bekannten Verfahren verarbeitet werden, z.B. durch Extrudieren, Spritzgießen, Kalandrieren, Hohlkörperblasen, Pressen oder Sintern. Besonders bevorzugt werden aus dem nach dem erfindungsgemäßen Verfahren hergestellten Produkten geformte Gebilde durch Spritzgießen hergestellt. Insbesondere eignen sich transluzente Produkte zur Herstellung von Folien für den Verpackungssektor, z.B. dann, wenn das Füllgut sichtbar bleiben soll.

Die von Proben der in den Beispielen und Vergleichsversuchen erhaltenen Produkte aufgeführten Eigenschaften werden wie folgt gemessen:

1. Die Viskositätszahl - VZ der Hartmatrix in ml/g wurde analog DIN 53 724 bestimmt.

2. Die Streckspannung - ST in $N/mm^2$ wurde analog DIN 53 455 bestimmt.

3. Die Lochkerbschlagzähigkeit - $a_{kl}$ in $kJ/m^2$ wird nach der DIN 53 753 bestimmt.

4. Zur Bewertung der Transluzenz der beim erfindungsgemäßen Verfahren erhaltenen Produkte wurde zunächst eine Skala erstellt. Diese Skala umfaßt die Noten 1 bis 9 in der folgenden Tabelle 1, wobei die niedrigeren Noten eine gute Transluzenz repräsentieren. Um die in der Tabelle 1 angeführten Noten zu definieren, wurde ein handelsübliches schlagzähes Polystyrol (Polystyrol KR 2791 der BASF Aktiengesellschaft) mit Kapselteilchenmorphologie zugrunde gelegt, das die Benotung 4 hat. Abmischungen dieses Produktes mit den in der Tabelle 1 genannten Gewichtsverhältnissen mit Standardpolystyrol der VZ = 96 ml/g ergaben die Werte von 3 bis 1 für die Transluzenz. Durch Abmischung mit einem schlagfesten handelsüblichen Polystyrol mit Zellenteilchenmorphologie (Polystyrol 476 L der BASF Aktiengesellschaft) wurden Mischungen mit höherer Transluzenz, also mit den Werten 5 bis 9 der Tabelle erhalten. Die Messung erfolgte durch visuellen Vergleich von 2 mm starken Preßplättchen aus Probematerial mit ebensolchen aus der genannten Eichsubstanz.

5. Von den Proben der Beispiele und Versuche wurden in bekannter Weise elektronenmikroskopische Dünnschichtaufnahmen angefertigt, die zur Bestimmung der Teilchengröße der Weichkomponentenphase dienen.

Tabelle 1

| Note für die Transluzenz | Abmischung in Gew.-Teilen Produkt A | Standardpolystyrol | Produkt B |
|---|---|---|---|
| 1 | 20 | 80 | 0 |
| 2 | 40 | 60 | 0 |
| 3 | 60 | 40 | 0 |
| 4 | 100 | 0 | 0 |
| 5 | 96 | 0 | 4 |
| 6 | 92 | 0 | 8 |
| 7 | 88 | 0 | 12 |
| 8 | 84 | 0 | 16 |
| 9 | 80 | 0 | 20 |

Die Erfindung wird nachstehend anhand von Beispielen näher erläutert. Alle darin angegebenen Teile sind Prozente und beziehen sich, sofern nichts anderes vermerkt, auf das Gewicht.

Beispiel

In einer kontinuierlich betriebenen Reaktorkaskade, bestehend aus zwei in Serie geschalteten Rührkesseln und zwei Reaktionstürmen, wurden Lösungen aus 7,2 Teilen Polybutadien, 2,4 Teilen medizinischem Weißöl, 6,0 Teilen Ethylbenzol, 84,4 Teilen Monostyrol, 0,12 Teilen Antioxidans (Irganox 1076 der Ciba-Geigy AG, Basel) und 0,1 Teilen tert.-Dodecylmercaptan bei einem Durchsatz von 4,5 l/h und einem End-Feststoffgehalt von 79 ± 1 Gew.-% polymerisiert.

4,5 l/h der o.a. Lösung wurden zunächst in einem 6 l Rührkessel (Ankerrührer, 100 UpM) bei 125°C bis zu einem Feststoffgehalt von 12 % (bei Einsatz von Blockcopolymerem 18 %) polymerisiert. Die Reaktionsmasse wurde aus dem Rührkessel kontinuierlich ausgetragen und einem 14 l Rührkessel (Ankerrührer, 50 UpM) zugeführt. Dort wurde bei 135°C bis zum Feststoffgehalt 36 % (38 %) polymerisiert. Die Reaktionsmasse wurde weiterhin kontinuierlich ausgetragen und einem als dritte Reaktionsstufe dienenden 9 l Turmreaktor zugeführt. In diesem Reaktor wurde bei ansteigender Temperatur zwischen 130 und 145°C bis zu einem Feststoffgehalt von 58 % polymerisiert. In einem zweiten, als vierte Reaktionsstufe dienenden nachgeschalteten Turmreaktor gleicher Größe wurde die Reaktion bei ansteigender Temperatur zwischen 140 und 165°C bis zu einem Feststoffgehalt von 79 % fortgesetzt. Die aus dem vierten Reaktor ausgetragene Reaktionsmasse wurde in einem Wärmetauscher auf 240°C erhitzt und in einem unter einem Druck von 15 mbar betriebenen Behälter entspannt. Hier wurden Ethylbenzol und nicht umgesetztes restliches Monomeres gasförmig abgezogen. Die Polymerisatschmelze wurde aus dem Vakuumbehälter ausgetragen und granuliert.

Verglichen wurden drei Polybutadiensorten und ein Styrol-Butadien-Blockcopolymerisat.

1. Polybutadien A ($\bar{M}_n$ = 60.000, -SH-Terminierung mit Propylensulfid)
   - erfindungsgemäß -
2. Polybutadien B ($\bar{M}_n$ = 60.000, keine SH-Terminierung)
3. Polybutadien C ($\bar{M}_n$ = 220.000, -SH-Terminierung mit Propylensulfid)
4. Styrol-Butadien-Blockcopolymer ($\bar{M}_n$ = 240.000, 40 % Styrolanteile, 33 % Blockstyrol, Molgewicht des Styrolblocks 80.000)
   - Stand der Technik -

Ergebnisse

| | 1 | 2 | 3 | 4 |
|---|---|---|---|---|
| Transluzenz | 4 | 10 | 10 | 4 |
| Streckspannung N/mm$^2$ | 29,5 | 24,5 | 25,0 | 30,6 |
| Lochkerbschlagzähigkeit kJ/m$^2$ | 8,5 | 10,2 | 10,5 | 7,9 |
| Teilchentyp | Kapseln | Zellen | Zellen | Kapseln |

Die Ergebnisse zeigen, daß niedermolekulares Polybutadien mit SH-Terminierung transluzentes schagfestes Polystyrol ergibt, das ohne die Endgruppe oder bei höherem Molekulargewicht nicht erreichbar ist; sie zeigen weiter, daß das nach dem erfindungsgemäßen Verfahren erhaltene Produkt dem Stand der Technik entspricht.

Patentansprüche

1. Verfahren zur Herstellung von mit Kautschuk schlagfest modifiziertem, transluzentem Polystyrol und/oder Poly(alkyl-)styrol, bei dem man einen Reaktionsansatz, bestehend aus Styrol, kernalkylierten Styrolen, seitenketten-alkylierten Styrolen oder deren Mischungen und mindestens einem kautschukartigen Polymerisat polymerisiert, dadurch gekennzeichnet, daß die Polymerisation kontinuierlich in Masse oder Lösung thermisch oder in Gegenwart Radikale bildender Initiatoren unter Rühren innerhalb von 5 bis 20 Stunden bis zu einem Endumsatz von 70 bis 95 %, bezogen auf das Monomere, durchgeführt wird, wobei so gerührt wird, daß nach Abschluß der Polymerisation die im erhaltenen modifizierten Polystyrol dispergierte Weichkomponente einen mittleren Teilchendurchmesser von 0.1 bis 0.8 $\mu$m besitzt und wobei das eingesetzte kautschukartige Polymere der Formel $P-(SH)_x$ entspricht, das zu mehr als 80 % aus konjugierten Dienen besteht und eine mittlere molare Masse von 20.000 bis 200.000 besitzt, wobei x die Anzahl von Thiolgruppen pro Kautschukmolekül darstellt und eine ganze Zahl von 1 bis 5 bedeutet und P ein Polymerisat aus konjugierten Dienen ist.

2. Verfahren nach Anspruch 1, dadurch gekennzeichnet, daß außer dem kautschukartigen Polymerisat $P-(SH)_x$ mindestens ein weiteres kautschukartiges Polymerisat mit mittlerer Molmasse im Bereich von 120.000 bis 400.000 anwesend ist und das Polymerisat $P-(SH)_x$ zu einem Anteil von mindestens 30 %, bezogen auf die Mischung, enthalten ist.

3. Verfahren nach Anspruch 1 und 2, dadurch gekennzeichnet, daß die Polymerisation in einem Rohrreaktor oder in einer Kaskade hintereinander geschalteter Reaktoren durchgeführt wird.

4. Verfahren nach Anspruch 1, 2 und 3, dadurch gekennzeichnet, daß die Polymerisation in Gegenwart eines Kettenübertragungsmittels erfolgt.